(19) Europäisches Patentamt
European Patent Office
Office européen des brevets

(11) Veröffentlichungsnummer: **0 038 460**
**B1**

# (12) EUROPÄISCHE PATENTSCHRIFT

(45) Veröffentlichungstag der Patentschrift: **22.02.84**

(51) Int. Cl.³: **C 09 K 3/34,** C 09 B 1/50

(21) Anmeldenummer: **81102570.9**

(22) Anmeldetag: **06.04.81**

(54) **Flüssigkristalline Materialien enthaltend Anthrachinonfarbstoffe.**

(30) Priorität: **18.04.80 DE 3014933**

(43) Veröffentlichungstag der Anmeldung: **28.10.81 Patentblatt 81/43**

(45) Bekanntmachung des Hinweises auf die Patenterteilung: **22.02.84 Patentblatt 84/8**

(84) Benannte Vertragsstaaten: **CH DE FR GB IT LI NL**

(56) Entgegenhaltungen:
**DE - A - 2 902 177**
**DE - A - 2 903 095**
**DE - A - 2 920 730**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Claussen, Uwe, Dr., Carl-Rumpff-Strasse 29, D-5090 Leverkusen 1 (DE)**
Erfinder: **Schroeder, Bernd, Dr., Schulstrasse 8, D-2226 Eddelak (DE)**
Erfinder: **Kröck, Friedrich Wilhelm, Dr., Gerstenkamp 12, D-5000 Köln 80 (DE)**

**EP 0 038 460 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Flüssigkristalline Materialien enthaltend Anthrachinonfarbstoffe

Die Erfindung betrifft flüssigkristalline Materialien, die Anthrachinonfarbstoffe enthalten. Das flüssigkristalline Material hat vorzugsweise positive dielektrische Anisotropie und kann in opto-elektronischen Anzeigevorrichtungen eingesetzt werden.

Der Anmelder legt unter Bezugnahme auf die älteren Anmeldungen DE 3 009 974, FR 2 451 392, GB 2 051 114, FR 2 466 494, GB 2 062 667, DE 3 038 372 und GB 2 065 695 gesonderte Ansprüche für DE, FR und GB vor.

Opto-elektronische Anzeigeelemente bestehen in der Regel aus 2 parallel (im Abstande von 5—50 μm) angeordneten Glasplatten. An deren Innenseiten werden Elektroden angebracht, zwischen denen das flüssigkristalline Material eingebettet wird. Die Funktionsfähigkeit einer opto-elektronischen Anzeige beruht auf der orientierten Struktur der Flüssigkristalle, die sich durch das angelegte elektrische Feld verändern läßt.

Die orientierte Struktur der flüssigkristallinen Materialien kann sich geeigneten Farbstoffen mitteilen, so daß diese als »Gäste« an der Struktur teilnehmen. Man hat dieses Phänomen daher auch als Wirt-Gast-Wechselwirkung bezeichnet [Heilmeier, Castellano, Zanoni: Mol. Crystals a. Liquid Cryst., (8) 293—304 1969].

Die Güte dieser Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1.0 annimmt. Praktisch wird dieser Wert nicht erreicht, vielmehr sind die S-Werte stets $<1.0$. Die in der Literatur angegebenen Werte sind wegen unterschiedlicher Meßtechniken nicht ohne weiteres vergleichbar. Die Definition des Ordnungsgrades und seine Bedeutung ist bei D. L. White und G. N. Taylor: J. Appl Phys (5) 4718—23 1974 oder beispielsweise in EP-OS 2 104 beschrieben.

Für die technische Verwendung sind Farbstoffe mit hohem Ordnungsgrad besonders wertvoll. Jedoch müssen eine Reihe weiterer Eigenschaften vorhanden sein. Der Farbstoff muß ladungsfrei sein. Andernfalls würde er im elektrischen Feld zwischen den Elektroden wandern. Die photochemische Stabilität muß sehr gut sein, der Farbton darf im Licht weder verschießen noch ausbleichen.

Darüberhinaus wird eine gute chemische Beständigkeit in dem komplex zusammengesetzten flüssigkristallinem Medium verlangt. Schließlich muß sich der Farbstoff gut lösen und darf auch bei anhaltend tiefen Temperaturen nicht kristallisieren.

Es ist offensichtlich, daß es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

In der Literatur sind zahlreiche Hinweise auf strukturelle Voraussetzungen geeigneter Farbstoffe angegeben, was ihre pleochroitische Eigenschaft angeht. So wird stets eine lange Achse, eine stabförmige, planare und symmetrische Struktur als Voraussetzung angesehen.

(F. Jones, T. J. Reeve: J. Soc. Dyers Col. 1979 352—359; J. Constant et al.: J. Phys. D: Appl. Phys. (11) 479 1978).

Wir haben nun überraschend gefunden, daß Anthrachinonverbindungen auch dann hervorragende pleochroitische Farbstoffe liefern, wenn sie weder planar, noch stäbchenförmig noch symmetrisch sind. Die Erfindung betrifft demnach flüssigkristallines Material enthaltend mindestens einen Farbstoff der Formel

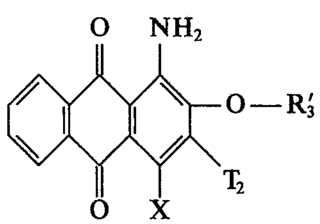

(I)

in der

$R'_3$ für einen aliphatischen, cycloaliphatischen, araliphatischen oder heterocyclischen Rest steht, wobei diese Reste substituiert sein können oder einen substituierten Arylrest steht,

$T_2$ Wasserstoff oder $OR''_3$ bezeichnet, wobei

$R''_3$ für einen cycloaliphatischen, araliphatischen oder heterocyclischen Rest steht, wobei die für $R''_3$ genannten Reste substituiert sein können und

X Wasserstoff, OH oder $NHR_1$ bezeichnet, wobei

$R_1$ für Wasserstoff, Alkyl, Cycloalkyl oder Aralkyl steht, wobei die für $R_1$ genannten Kohlenwasserstoffreste substituiert sein können.

Innerhalb dieser Gruppe sind Verbindungen der Formel

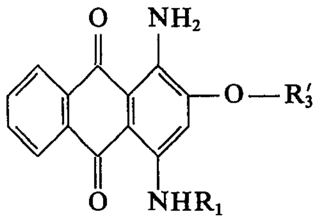

(II)

in der

$R_1$ und $R_3'$ die zu Formel I angegebenen Bedeutungen haben, besonders bevorzugt.

Von ganz besonderem Interesse zum Einsatz in das flüssigkristalline Material sind Verbindungen der Formel

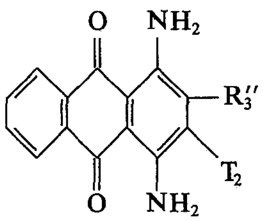

(III)

in der

$R_3''$ und $T_2$ die zu Formel I angegebenen Bedeutungen haben.

Bevorzugt eingesetzt werden weiterhin Verbindungen der Formel

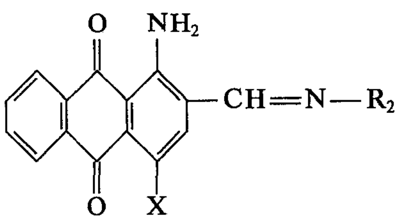

(IV)

in der

X die zu Formel I angegebenen Bedeutungen hat und
$R_2$ für Alkyl, Cycloalkyl, Aralkyl, Aryl oder einen heterocyclischen Rest bezeichnet, wobei die für $R_2$ genannten Reste substituiert sein können.

Innerhalb dieser Gruppe sind Verbindungen der Formel

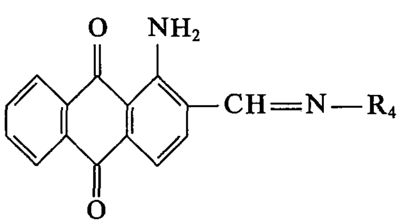

(IVa)

besonders wertvoll.
In Formel (IV a) bezeichnet

$R_4$ einen Aryl- oder heterocyclischen Rest, wobei diese Reste durch Alkyl, Aryl, Halogen, eine Ether oder Thioethergruppe substituiert sein können.

Weiterhin sehr gut geeignet sind Verbindungen der Formel

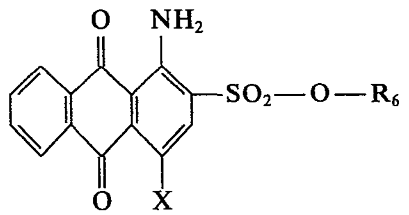

(V)

in der

X die zu Formel I angegebenen Bedeutungen hat und vorzugsweise $-NH_2$ bezeichnet und
$R_6$ für einen aliphatischen, araliphatischen, cycloaliphatischen, Aryl- oder heterocyclischen Rest oder ein cycloaliphatischen, Aryl- oder heterocyclisches Ringsystem, wobei die genannten Reste und Ringsysteme substituiert sein können, steht.

Die einzelnen Substituenten zu den Formeln (I)—(V) haben beispielsweise folgende Bedeutungen:

$R_1$: Wasserstoff, $C_1$—$C_6$-Alkyl, $C_3$—$C_7$-Cycloalkyl, Benzyl, Phenethyl;

$R_2$, $R_6$: $C_1$—$C_6$-Alkyl, das z. B. durch $C_1$—$C_4$-Alkoxy, Hydroxy, Phenoxy, Halogen vorzugsweise Chlor oder Brom substituiert sein kann; Phenyl, das durch Halogen vorzugsweise Chlor und Brom, $C_1$—$C_4$-Alkyl, $C_1$—$C_4$-Alkoxy, $C_1$—$C_4$-Alkylthio, $NO_2$, CN, $CF_3$, $C_1$—$C_4$-Alkylamino, $C_1$—$C_4$-Dialkylamino substituiert sein kann; $C_3$—$C_7$-Cycloalkyl vorzugsweise Cyclohexyl; Benzyl-, Phenethyl; einen 5- oder 6gliedrigen, ein bis drei Heteroatome aus der Reihe O, N, S enthaltenden, heterocyclischen Ring, der beispielsweise durch $C_1$—$C_4$-Alkyl oder Phenyl substituiert sein kann und an den Benzolring ankondensiert sein kann;

$R'_3$: $C_1$—$C_6$-Alkyl, das z. B. durch $C_1$—$C_4$-Alkoxy, Hydroxy, Phenoxy oder Halogen vorzugsweise Chlor substituiert sein kann; $C_3$—$C_7$-Cycloalkyl; Benzyl, Phenethyl; Phenyl, Naphthyl, die substituiert sind, beispielsweise durch $C_1$—$C_4$-Alkyl, $C_1$—$C_4$-Alkoxy, $C_1$—$C_4$-Alkylthio, Halogen vorzugsweise Chlor und Brom, Phenyl, Cyclohexyl und Cyan;

$R_4$: Phenyl, das durch Halogen vorzugsweise Chlor und Brom, $C_1$—$C_4$-Alkyl, $C_1$—$C_4$-Alkoxy, $C_1$—$C_4$-Alkylthio, $NO_2$, CN, $CF_3$, $C_1$—$C_4$-Alkylamino, $C_1$—$C_4$-Dialkylamino substituiert sein kann; einen 5- oder 6gliedrigen ein bis drei Heteroatome aus der Reihe O, N, S enthaltenden heterocyclischen Ring, der beispielsweise durch $C_1$—$C_4$-Alkyl oder Phenyl substituiert sein kann und an den ein Benzolring ankondensiert sein kann.

Das flüssigkristalline Material enthält den Farbstoff oder Gemische der Farbstoffe vorzugsweise zu etwa 0,01 bis etwa 30 Gew.-%.

Die erfindungsgemäß verwendbaren Farbstoffe sind bekannt [s. z. B. DE-B-1 644 587; DE-B-1 224 425; Houben-Weyl, 4. Aufl., Bd. VII 3c, S. 244; DE-A-1 807 492; DE-B-1 144 678; DE-B-1 262 209; DE-B-1 184 878; DE-B-1 284 544; DE-A-1 719 397] oder in Analogie zu literaturbekannten Verfahren herstellbar.

Zur Erzielung eines hohen Ordnungsgrades ist es notwendig, die Farbstoffe von farbigen Begleitsubstanzen zu befreien. Dies geschieht optimal durch chromatographische Techniken, insbesondere durch Säulenchromatographie. Die reinen Verbindungen liefern im flüssigkristallinen Material gelöst rote bis blaue Farbtöne. Sie kennzeichnet ein hoher Ordnungsgrad, eine sehr gute Lichtechtheit und gute chemische Beständigkeit. Sie sind gut löslich.

Das flüssigkristalline Material kann beliebig gewählt werden, es muß jedoch den erfindungsgemäßen Farbstoff in ausreichender Menge aufnehmen können. Eine ausreichende Konzentration ist gegeben, wenn sich eine 0,1-5%ige Lösung, bzw. 0,5—2%ige Lösung in dem flüssigkristallinen Material herstellen läßt.

Von den verschiedenen Ordnungszuständen flüssigkristalliner Materialien sind die nematischen und cholesterinischen bevorzugt, entsprechend den Definitionen, wie sie beispielsweise bei R. Steinsträßer, L. Pohl; Angew. Chem. 85, 706 (1973) angegeben sind.

In feldlosem Zustand kann man zwei Orientierungen des flüssigkristallinen Materials unterscheiden, die von der Eigenschaft der Phasengrenze und damit von der Vorbehandlung der Oberflächen der Glasplatten abhängigen. Je nachdem ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann Bd. XI S. 657 ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ wenn sie homogen wird. Die Verwendung der erfindungsgemäßen Farbstoffe in flüssigkristallinen Materialien mit positiver dielektrischer Anisotropie ist bevorzugt. Als flüssigkristalline Materialien geeignet sind z. B. Gemische aus Alkylcyano-bisphenylen, Alkoxycyano-biphenylen,

Alkylcyano-terphenylen, Phenylcyclohexanen, Bicyclohexylen, Azoxyverbindungen, Schiffsche Basen, Benzoesäurephenylestern, Thiobenzoesäurephenylestern und Terpyrimidinen. Besonders hervorzuheben ist eine Mischung aus 51%4'n-Pentyl-4-cyano-biphenyl, 25%4'n-Heptyl-4-cyano-biphenyl, 16% 4'n-Octyl-4-cyano-biphenyl und 8%4"-n-Pentyl-4-cyano-terphenyl und eine Mischung aus ca. 24% trans-4-Heptyl(4-cyanophenyl)cyclohexan, 37% trans-4-Pentyl(4-cyano-phenyl)cyclohexan, 26% trans-4-Propyl(4-cyanophenyl)cyclohexan und 12% trans-4-Pentyl(4'-cyano-biphenyl)cyclohexan. Neben den flüssigkristallinen Verbindungen und dem Farbstoff kann das flüssigkristalline Material weitere übliche Zusätze enthalten, z. B. optisch aktive Verbindungen, die eine nematische Phase in eine cholesterinische umwandeln können oder Substanzen zur Verminderung der Schwellenspannung usw.

## Beispiel 1

15 g 1.4-Diamino-2-phenoxyanthrachinon werden in 400 ml Methylenchlorid gelöst und auf eine Säule (⌀ 70 nm) gegeben, die 2 kg Kieselgel (Merck) enthält. Man eluiert zuerst mit Methylenchlorid und danach mit Essigsäuremethylester.

Man erhält 11 g reinen Farbstoff mit dem Fp. 190°.

Von diesem Farbstoff wird eine 0,5%gewichtsprozentige Lösung in einer Mischung folgender flüssigkristalliner Substanzen 24% trans-4-Heptyl(4-cyanophenyl)cyclohexan, 37% trans-4-Phenyl(4-cyano-phenyl)cyclohexan, 26%trans-4-Propyl(4-cyano-phenyl)cyclohexan und 12%trans-4-Pentyl-(4'-cyano-biphenyl)cyclohexan hergestellt und der Ordnungsgrad entsprechend den üblichen Methoden, wie sie beispielsweise in der Firmenschrift der BDH Chemicals Ltd. Poole Dorset, Autoren J. Constant, M. G. Pellatt, IHC Roe »Photostable Anthraquinone Pleochroic Dyes« S. 9 beschrieben ist, gemessen. Der Ordnungsgrad S beträgt 0,72.

In den folgenden Tabellen sind weitere geeignete Verbindungen, die sich analog zu Beispiel 1 in flüssigkristallines Material einsetzen lassen, angegeben.

Tabelle 1

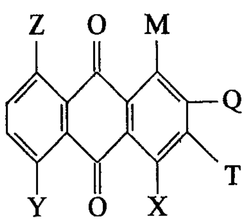

| M | Q | T | X | Y | Z |
|---|---|---|---|---|---|
| $NH_2$ | 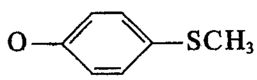 | H | $NH_2$ | H | H |
| $NH_2$ | 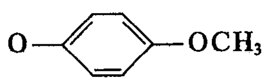 | H | $NH_2$ | H | H |
| $NH_2$ | 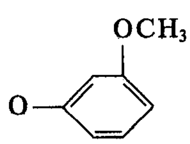 | H | $NH_2$ | H | H |
| $NH_2$ | 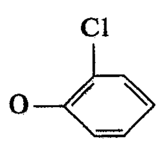 | H | $NH_2$ | H | H |
| $NH_2$ | 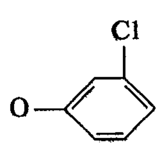 | H | $NH_2$ | H | H |

(Fortsetzung)

| M | Q | T | X | Y | Z |
|---|---|---|---|---|---|
| $NH_2$ | 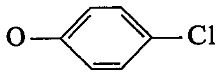 | H | $NH_2$ | H | H |
| $NH_2$ | 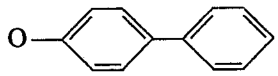 | H | $NH_2$ | H | H |
| $NH_2$ | 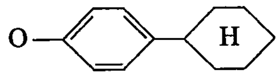 | H | $NH_2$ | H | H |
| $NH_2$ | $O—CH_2—CH_2—OCH_3$ | H | $NH_2$ | H | H |
| $NH_2$ | 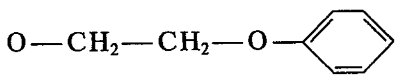 | H | $NH_2$ | H | H |
| $NH_2$ | 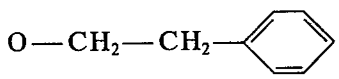 | H | $NH_2$ | H | H |
| $NH_2$ | 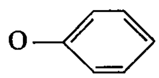 | 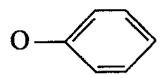 | $NH_2$ | H | H |
| $NH_2$ | 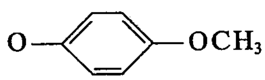 | 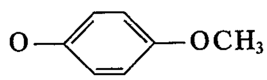 | $NH_2$ | H | H |
| $NH_2$ | 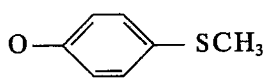 | 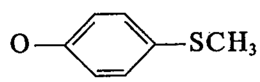 | $NH_2$ | H | H |
| $NH_2$ | 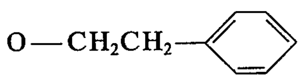 | H | 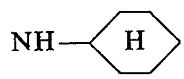 | H | H |
| $NH_2$ | $O—CH_3$ | H | OH | H | H |
| $NH_2$ | $O—C_8H_{17}$ | H | OH | H | H |
| $NH_2$ | 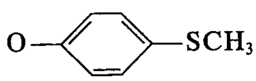 | H | OH | H | H |
| $NH_2$ | 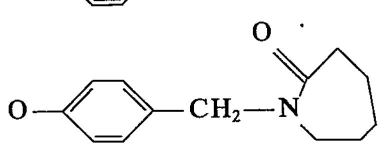 | H | OH | H | H |
| $NH_2$ | 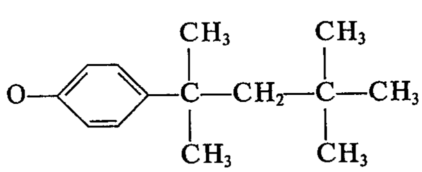 | H | OH | H | H |
| $NH_2$ | 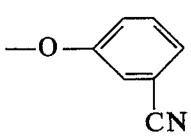 | H | OH | H | H |
| $NH_2$ | 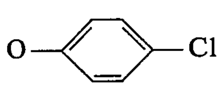 | H | OH | H | H |
| $NH_2$ | 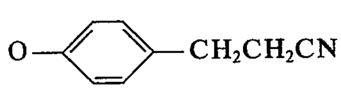 | H | OH | H | H |

(Fortsetzung)

| M | Q | T | X | Y | Z |
|---|---|---|---|---|---|
| $NH_2$ | 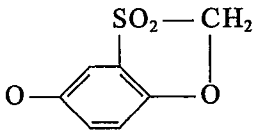 | H | OH | H | H |
| $NH_2$ | 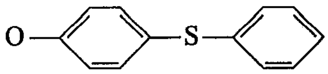 | H | OH | H | H |
| $NH_2$ | 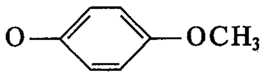 | H | OH | H | H |
| $NH_2$ | 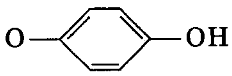 | H | OH | H | H |
| $NH_2$ | 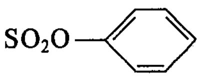 | H | H | H | H |
| $NH_2$ | 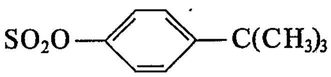 | H | H | H | H |
| $NH_2$ | 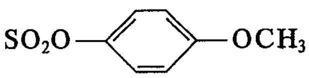 | H | H | H | H |
| $NH_2$ | 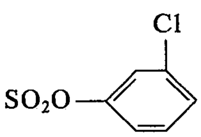 | H | H | H | H |
| $NH_2$ | 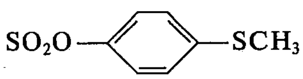 | H | H | H | H |
| $NH_2$ | 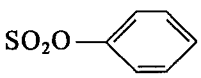 | H | $NH_2$ | H | H |
| $NH_2$ | 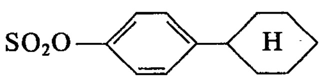 | H | $NH_2$ | H | H |
| $NH_2$ | 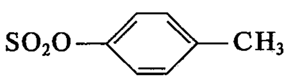 | H | $NH_2$ | H | H |
| $NH_2$ | 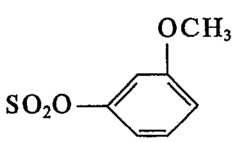 | H | $NH_2$ | H | H |
| $NH_2$ | 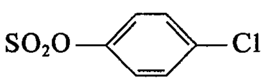 | H | $NH_2$ | H | H |
| $NH_2$ | 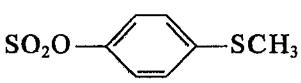 | H | $NH_2$ | H | H |
| $NH_2$ | 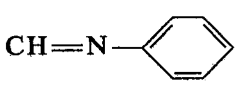 | H | H | H | H |
| $NH_2$ | 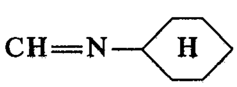 | H | H | H | H |

(Fortsetzung)

| M | Q | T | X | Y | Z |
|---|---|---|---|---|---|
| $NH_2$ | 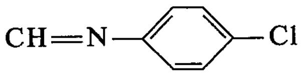 | H | H | H | H |
| $NH_2$ | 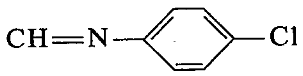 | H | H | H | H |
| $NH_2$ | 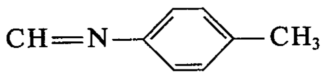 | H | H | H | H |
| $NH_2$ | 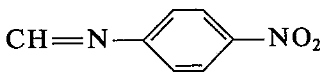 | H | H | H | H |
| $NH_2$ | 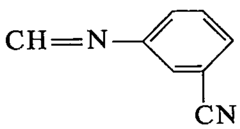 | H | H | H | H |
| $NH_2$ | 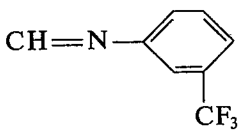 | H | H | H | H |
| $NH_2$ | 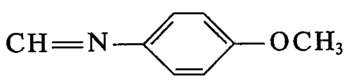 | H | H | H | H |
| $NH_2$ | 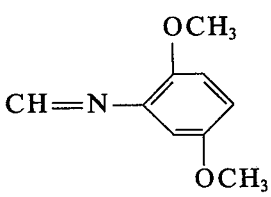 | H | H | H | H |
| $NH_2$ | 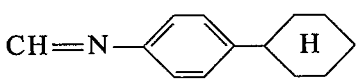 | H | H | H | H |
| $NH_2$ | 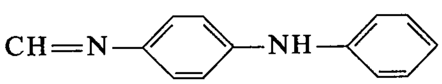 | H | H | H | H |
| $NH_2$ | 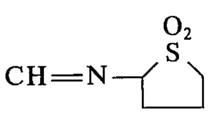 | H | H | H | H |
| $NH_2$ | 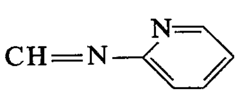 | H | H | H | H |
| $NH_2$ | 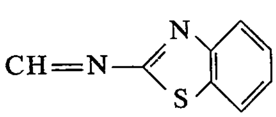 | H | H | H | H |
| $NH_2$ | 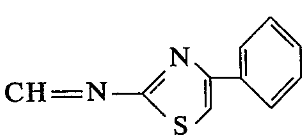 | H | H | H | H |
| $NH_2$ | 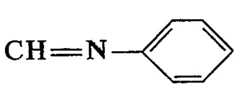 | H | $NH_2$ | H | H |

(Fortsetzung)

| M | Q | T | X | Y | Z |
|---|---|---|---|---|---|
| $NH_2$ | 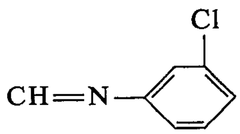 | H | $NH_2$ | H | H |
| $NH_2$ | 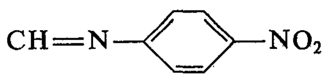 | H | $NH_2$ | H | H |
| $NH_2$ | 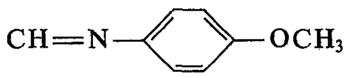 | H | $NH_2$ | H | H |
| $NH_2$ | 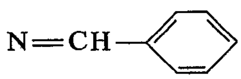 | H | H | H | H |
| $NH_2$ | 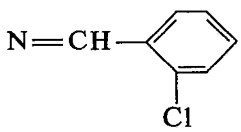 | H | H | H | H |

**Patentansprüche für Vertragsstaaten: CH, IT, LI, NL**

1. Flüssigkristallines Material enthaltend einen Farbstoff der Formel

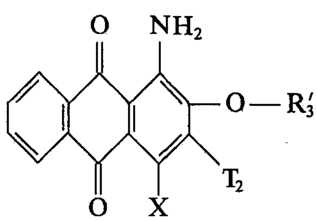

(I)

in der

$R_3'$ für einen aliphatischen, cycloaliphatischen, araliphatischen oder heterocyclischen Rest, wobei diese Reste substituiert sein können, oder einen substituierten Arylrest steht,
$T_2$ Wasserstoff oder $-O-R_3''$ bezeichnet, wobei
$R_3''$ für einen aliphatischen, cycloaliphatischen, araliphatischen, Aryl- oder heterocyclischen Rest steht, wobei die für $R_3''$ genannten Reste substituiert sein können und
X Wasserstoff, OH oder $NHR_1$ bezeichnet, wobei
$R_1$ für Wasserstoff, Alkyl, Cycloalkyl oder Aralkyl steht, wobei die für $R_1$ genannten Kohlenwasserstoffreste substituiert sein können.

2. Flüssigkristallines Material enthaltend einen Farbstoff der Formel

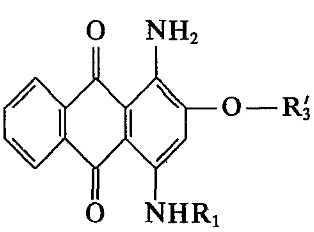

(II)

in der

$R_1$ und $R_3'$ die in Anspruch 1 angegebenen Bedeutungen haben.

3. Flüssigkristallines Material enthaltend einen Farbstoff der Formel

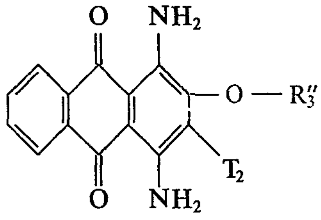

(III)

in der

$R_3''$ und $T_2$ die in Anspruch 1 angegebenen Bedeutungen haben.

4. Flüssigkristallines Material enthaltend einen Farbstoff der Formel

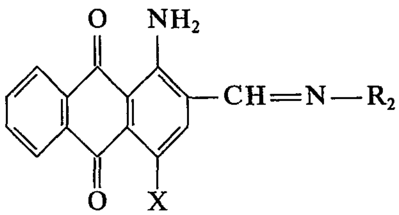

(IV)

in der

X die in Anspruch 1 angegebene Bedeutung hat und
$R_2$ Alkyl, Cycloalkyl, Aralkyl, Aryl oder einen heterocyclischen Rest bezeichnet, wobei die für $R_2$ genannten Reste substituiert sein können.

5. Flüssigkristallines Material enthaltend einen Farbstoff der Formel

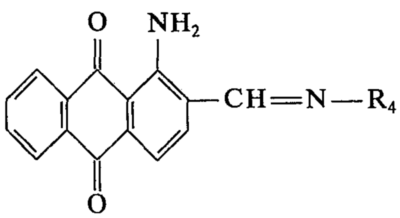

(IVa)

in der

$R_4$ einen Aryl- oder einen heterocyclischen Rest, wobei diese Reste durch Alkyl, Aryl, Halogen, eine Ether- oder Thioethergruppe substituiert sein können, bezeichnet.

6. Flüssigkristallines Material enthaltend einen Farbstoff der Formel

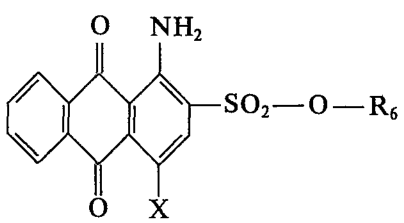

(V)

in der

X die in Anspruch 1 angegebene Bedeutung hat und
$R_6$ einen aliphatischen, araliphatischen, cycloaliphatischen, Aryl- oder heterocyclischen Rest oder ein cycloaliphatisches, Aryl- oder heterocyclisches Ringsystem, wobei die genannten Reste und Ringsysteme substituiert sein können, bezeichnet.

7. Flüssigkristallines Material gemäß den Ansprüchen 1–6, dadurch gekennzeichnet, daß es den Farbstoff zu etwa 0,01 bis etwa 30 Gew.-% enthält.

8. Flüssigkristallines Material gemäß den Ansprüchen 1—7, dadurch gekennzeichnet, daß es Farbstoffmischungen enthält.

**Patentansprüche für die Vertragsstaaten: DE, GB, FR**

1. Flüssigkristallines Material enthaltend einen Farbstoff der Formel

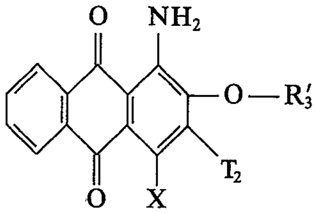

(I)

in der

$R_3'$ für einen cycloaliphatischen, araliphatischen oder heterocyclischen Rest, wobei diese Reste substituiert sein können, steht,
$T_2$ Wasserstoff oder $-O-R_3''$ bezeichnet, wobei
$R_3''$ für einen cycloaliphatischen, araliphatischen oder heterocyclischen Rest steht, wobei die für $R_3''$ genannten Reste substituiert sein können, und
X Wasserstoff, OH oder $NHR_1$ bezeichnet, wobei
$R_1$ für Wasserstoff, Alkyl, Cycloalkyl oder Aralkyl steht, wobei die für $R_1$ genannten Kohlenwasserstoffreste substituiert sein können.

2. Flüssigkristallines Material enthaltend einen Farbstoff der Formel

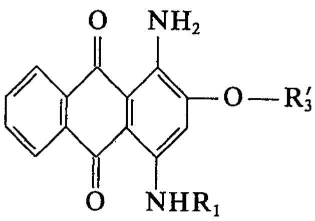

(II)

in der

$R_1$ und $R_3'$ die in Anspruch 1 angegebene Bedeutungen haben.

3. Flüssigkristallines Material enthaltend einen Farbstoff der Formel

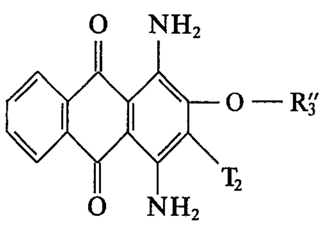

(III)

in der

$R_3''$ und $T_2$ die in Anspruch 1 angegebene Bedeutung haben.

4. Flüssigkristallines Material enthaltend einen Farbstoff der Formel

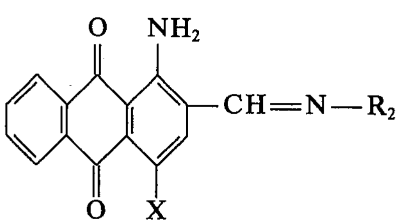

(IV)

in der

X die in Anspruch 1 angegebene Bedeutung hat und

$R_2$ Alkyl, Cycloalkyl, Aralkyl, Aryl oder einen heterocyclischen Rest bezeichnet, wobei die für $R_2$ genannten Reste substituiert sein können.

5. Flüssigkristallines Material enthaltend einen Farbstoff der Formel

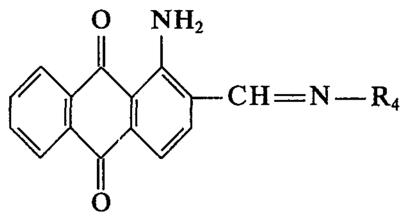

(IVa)

in der

$R_4$ einen Aryl- oder einen heterocyclischen Rest, wobei diese Reste durch Alkyl, Aryl, Halogen, eine Ether- oder Thioethergruppe substituiert sein können, bezeichnet.

6. Flüssigkristallines Material enthaltend einen Farbstoff der Formel

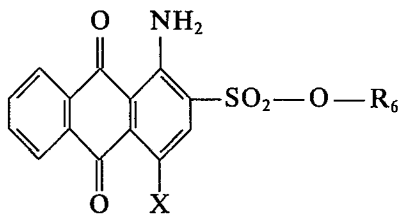

(V)

in der

X die in Anspruch 1 angegebene Bedeutung hat und

$R_6$ einen aliphatischen, araliphatischen, cycloaliphatischen, Aryl- oder heterocyclischen Rest oder ein cycloaliphatisches, Aryl- oder heterocyclisches Ringsystem, wobei die genannten Reste und Ringsysteme substituiert sein können, bezeichnet.

7. Flüssigkristallines Material gemäß den Ansprüchen 1–6, dadurch gekennzeichnet, daß es den Farbstoff zu etwa 0,01 bis etwa 30 Gewichts-% enthält.

8. Flüssigkristallines Material gemäß den Ansprüchen 1–7, dadurch gekennzeichnet, daß es Farbstoffmischungen enthält.

**Claims for the Contracting States: CH, IT, LI, NL**

1. Liquid crystal material containing a dyestuff of the formula

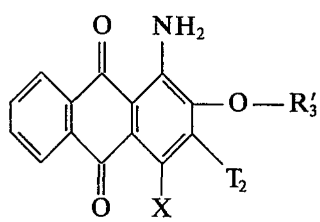

(I)

in which

$R_3'$ represents an aliphatic, cycloaliphatic, araliphatic or heterocyclic radical, it being possible for these radicals to be substituted, or a substituted aryl radical,

$T_2$ designates hydrogen or $-O-R_3''$, wherein

$R_3''$ represents an aliphatic, cycloaliphatic, araliphatic, aryl or heterocyclic radical, it being possible for the radicals mentioned for $R_3''$ to be substituted and

X designates hydrogen, OH or $NHR_1$, wherein

$R_1$ represents hydrogen, alkyl, cycloalkyl or aralkyl, it being possible for the hydrocarbon radicals mentioned for $R_1$ to be substituted.

2. Liquid crystal material containing a dyestuff of the formula

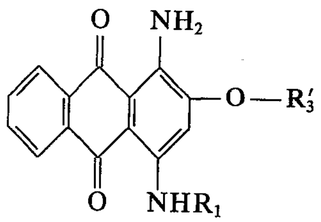

(II)

in which

$R_1$ and $R'_3$ have the meanings indicated in Claim 1.

3. Liquid crystal material containing a dyestuff of the formula

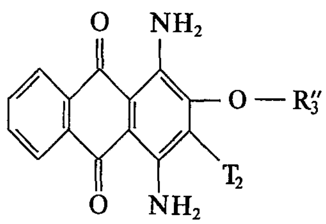

(III)

in which

$R''_3$ and $T_2$ have the meanings indicated in Claim 1.

4. Liquid crystal material containing a dyestuff of the formula

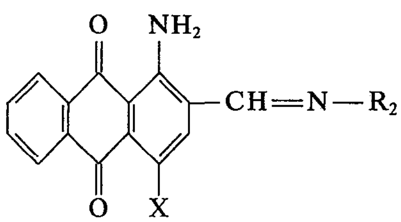

(IV)

in which

X has the meaning indicated in Claim 1 and
$R_2$ designates alkyl, cycloalkyl, aralkyl, aryl or a heterocyclic radical, it being possible for the radicals mentioned for $R_2$ to be substituted.

5. Liquid crystal material containing a dyestuff of the formula

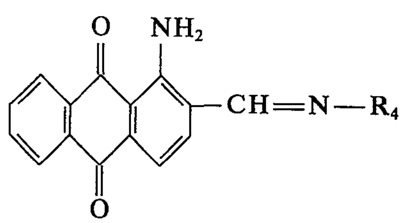

(IVa)

in which

$R_4$ designates an aryl or a heterocyclic radical, it being possible for these radicals to be substituted by alkyl, aryl, halogen, or an ether or thioether group.

6. Liquid crystal material containing a dyestuff of the formula

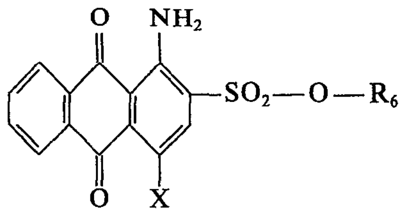

(V)

in which

X has the meaning indicated in Claim 1 and

$R_6$ designates an aliphatic, araliphatic, cycloaliphatic, aryl or heterocyclic radical or a cycloaliphatic, aryl or heterocyclic ring system, it being possible for the radicals and ring systems mentioned to be substituted.

7. Liquid crystal material according to Claims 1—6, characterised in that it contains about 0.01 to about 30% by weight of the dyestuff.

8. Liquid crystal material according to Claims 1—7, characterised in that it contains dyestuff mixtures.

**Claims for the Contracting States: DE, FR, GB**

1. Liquid crystal material containing a dyestuff of the formula

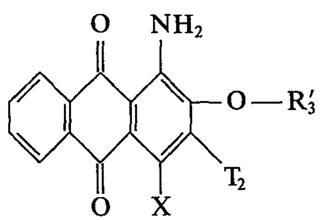

(I)

in which

$R_3'$ represents a cycloaliphatic, araliphatic or heterocyclic radical, it being possible für these radicals to be substituted,

$T_2$ designates hydrogen or $-O-R_3''$, wherein

$R_3''$ represents a cycloaliphatic, araliphatic or heterocyclic radical, it being possible for the radicals mentioned for $R_3''$ to be substituted, and

X designates hydrogen, OH or $NHR_1$, wherein

$R_1$ represents hydrogen, alkyl, cycloalkyl or aralkyl, it being possible for the hydrocarbon radicals mentioned for $R_1$ to be substituted.

2. Liquid crystal material containing a dyestuff of the formula

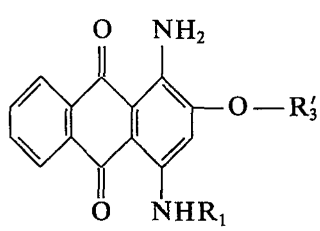

(II)

in which

$R_1$ and $R_3'$ have the meanings indicated in Claim 1.

3. Liquid crystal material containing a dyestuff of the formula

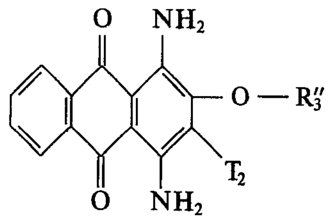

(III)

in which

$R_3''$ and $T_2$ have the meaning indicated in Claim 1.

4. Liquid crystal material containing a dyestuff of the formula

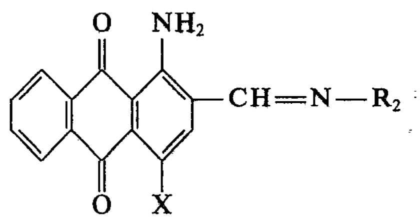

(IV)

in which

X has the meaning indicated in Claim 1 and
$R_2$ designates alkyl, cycloalkyl, aralkyl, aryl or a heterocyclic radical, it being possible for the radicals mentioned for $R_2$ to be substituted.

5. Liquid crystal material containing a dyestuff of the formula

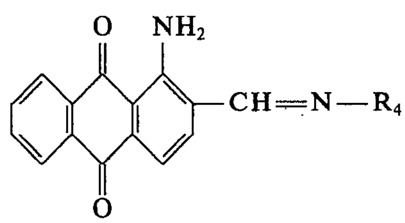

(IVa)

in which

$R_4$ designates an aryl or a heterocyclic radical, it being possible for these radicals to be substituted by alkyl, aryl, halogen, or an ether or thioether group.

6. Liquid crystal material containing a dyestuff of the formula

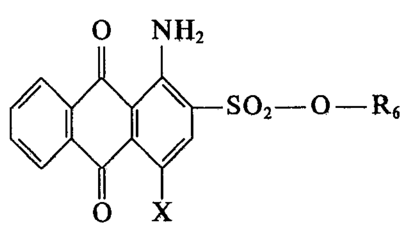

(V)

in which

X has the meaning indicated in Claim 1 and
$R_6$ designates an aliphatic, araliphatic, cycloaliphatic, aryl or heterocyclic radical or a cycloaliphatic, aryl or heterocyclic ring system, it being possible for the radicals and ring systems mentioned to be substituted.

7. Liquid crystal material according to Claims 1—6, characterised in that it contains about 0.01 to about 30% by weight of the dyestuff.

8. Liquid crystal material according to Claims 1—7, characterised in that it contains dyestuff mixtures.

**Revendications pour les Etats contractants: CH, IT, LI, NL**

1. Matière cristalline liquide contenant un colorant de formule

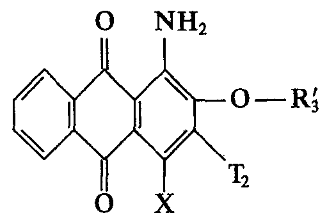

(I)

dans laquelle

$R_3'$ représente un reste aliphatique, cycloaliphatique, araliphatique ou hétérocyclique, ces restes pouvant être substitués, ou un reste aryle substitué,
$T_2$ désigne l'hydrogène ou un groupe $-O-R_3''$, dans lequel
$R_3''$ représente un reste aliphatique, cycloaliphatique, araliphatique, aryle ou hétérocyclique, les restes mentionnés pour $R_3''$ pouvant être substitués, et
X représente l'hydrogène, le groupe OH ou un groupe $NHR_1$ dans lequel
$R_1$ est l'hydrogène, un groupe alkyle, cycloalkyle ou aralkyle, les restes hydrocarbonés mentionnés pour $R_1$ pouvant être substitués.

2. Matière cristalline liquide contenant un colorant de formule

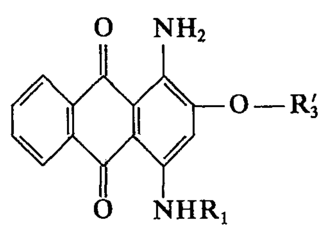

(II)

dans laquelle

$R_1$ et $R_3'$ ont les définitions indiquées dans la revendication 1.

3. Matière cristalline liquide contenant un colorant de formule

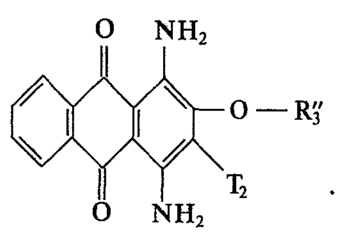

(III)

dans laquelle

$R_3''$ et $T_2$ ont la définition indiquée dans la revendication 1.

4. Matière cristalline liquide contenant un colorant de formule

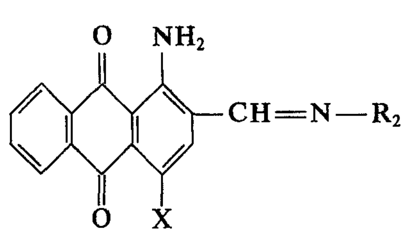

(IV)

dans laquelle

X a la définition indiquée dans la revendication 1 et
$R_2$ est un reste alkyle, cycloalkyle, aralkyle, aryle ou un reste hétérocyclique, les restes mentionnés

pour $R_2$ pouvant être substitués.

5. Matière cristalline liquide contenant un colorant de formule

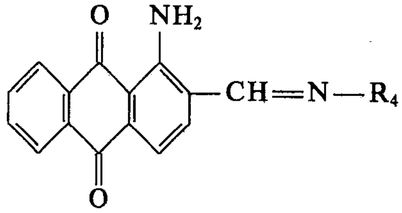

(IVa)

dans laquelle

$R_4$ est un reste aryle ou un hétérocyclique, ces restes pouvant être substitués par un groupe alkyle, aryle, un halogène, un groupe éther ou thioéther.

6. Matière cristalline liquide contenant un colorant de formule

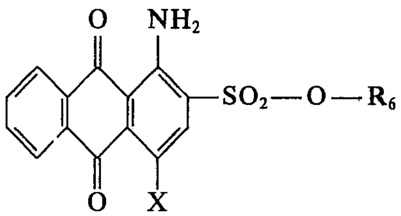

(V)

dans laquelle

X a la définition indiquée dans la revendication 1 et
$R_6$ est un reste aliphatique, araliphatique, cycloaliphatique, aryle ou hétérocyclique ou un noyau cycloaliphatique, arylique ou hétérocyclique, les restes et les noyaux mentionnés pouvant être substitués.

7. Matière cristalline liquide suivant les revendications 1 à 6, caractérisée en ce qu'elle contient le colorant en proportion d'environ 0,01 à environ 30% en poids.

8. Matière cristalline liquide suivant les revendications 1 à 7, caractérisée en ce qu'elle contient des mélanges de colorants.

**Revendications pour les Etats contractants: DE, FR, GB**

1. Matière cristalline liquide contenant un colorant de formule

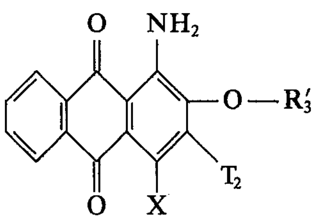

(I)

dans laquelle

$R_3'$ représente un reste cycloaliphatique, araliphatique ou hétérocyclique, ces restes pouvant être substitués,
$T_2$ désigne l'hydrogène ou un groupe $-O-R_3''$, dans lequel
$R_3''$ représente un reste cycloaliphatique, araliphatique ou hétérocyclique, les restes mentionnés pour $R_3''$ pouvant être substitués, et
X représente l'hydrogène, le groupe OH ou un groupe $NHR_1$ dans lequel
$R_1$ est l'hydrogène, un groupe alkyle, cycloalkyle ou aralkyle, les restes hydrocarbonés mentionnés pour $R_1$ pouvant être substitués.

2. Matière cristalline liquide contenant un colorant de formule

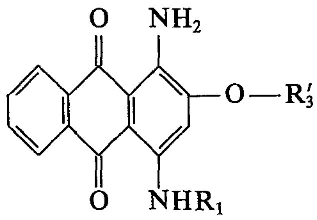

(II)

dans laquelle

$R_1$ et $R'_3$ ont les définitions indiquées dans la revendication 1.

3. Matière cristalline liquide contenant un colorant de formule

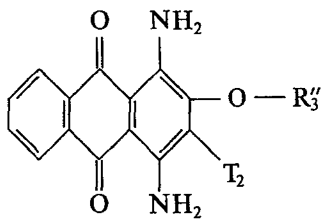

(III)

dans laquelle

$R''_3$ et $T_2$ ont la définition indiquée dans la revendication 1.

4. Matière cristalline liquide contenant un colorant de formule

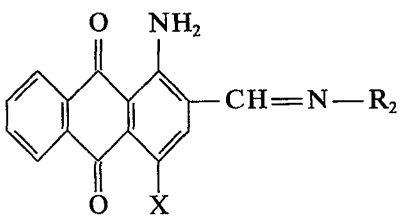

(IV)

dans laquelle

X a la définition indiquée dans la revendication 1 et
$R_2$ est un reste alkyle, cycloalkyle, aralkyle, aryle ou un reste hétérocyclique, les restes mentionnés pour $R_2$ pouvant être substitués.

5. Matière cristalline liquide contenant un colorant de formule

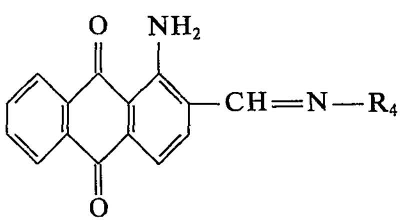

(IVa)

dans laquelle

$R_4$ est un reste aryle ou un reste hétérocyclique, ces restes pouvant être substitués par un groupe alkyle, aryle, un halogène, un groupe éther ou thioéther.

6. Matière cristalline liquide contenant un colorant de formule

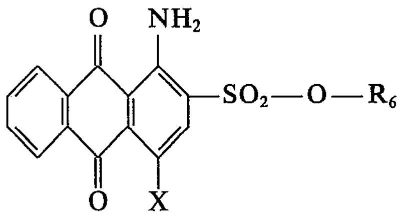

(V)

dans laquelle

X a la définition inidquée dans la revendication 1 et

$R_6$ est un reste aliphatique, araliphatique, cycloaliphatique, aryle ou hétérocyclique ou un noyau cycloaliphatique, arylique ou hétérocyclique, les restes et les noyaux mentionnés pouvant être substitués.

7. Matière cristalline liquide suivant les revendications 1 à 6, caractérisée en ce qu'elle contient le colorant en proportion d'environ 0,01 à environ 30% en poids.

8. Matière cristalline liquide suivant les revendications 1 à 7, caractérisée en ce qu'elle contient des mélanges de colorants.